Europäisches Patentamt

European Patent Office

Office européen des brevets

(19)

(11) Veröffentlichungsnummer: **0 050 200 B1**

(12) # EUROPÄISCHE PATENTSCHRIFT

(45) Veröffentlichungstag der Patentschrift:
12.12.84

(21) Anmeldenummer: 81106465.8

(22) Anmeldetag: 20.08.81

(51) Int. Cl.³: **B 61 D 17/02, B 62 D 35/02**

(54) Hängende, selbsttragende Abdeckhauben zum Geräteschutz und zur Aerodynamik-Verbesserung.

(30) Priorität: 22.10.80 DE 3039768

(43) Veröffentlichungstag der Anmeldung:
28.04.82 Patentblatt 82/17

(45) Bekanntmachung des Hinweises auf die Patenterteilung:
12.12.84 Patentblatt 84/50

(84) Benannte Vertragsstaaten:
AT FR GB IT

(56) Entgegenhaltungen:
DE - B - 1 096 944
DE - B - 1 286 917
DE - B - 2 319 061
DE - B - 2 658 458
FR - A - 2 449 020
GB - A - 2 050 275

(73) Patentinhaber: Messerschmitt-Bölkow-Blohm
Gesellschaft mit beschränkter Haftung,
Robert-Koch-Strasse, D-8012 Ottobrunn (DE)

(72) Erfinder: Fahlbusch, Heinz, Dr. Dipl.-Ing., Schöne
Aussicht 27, D-5960 Olpe/Biggesee (DE)
Erfinder: Liepert, Meinrad, Bernhard-Monath-Strasse 8a,
D-8901 Meitingen (DE)
Erfinder: Bönisch, Manfred, Ing. grad.,
Pyrkstockstrasse 20, D-8850 Donauwörth (DE)
Erfinder: David, Wolfgang, Ing. grad.,
Abt-Königsdorfer-Strasse 26, D-8850 Donauwörth (DE)

## Beschreibung

Die Erfindung bezieht sich auf eine hängende Abdeckhaube für Anbauten an Fahrzeugen, wie Werkzeugkästen, Rohrleitungen, Entlüftungsanlagen, Getriebe- und Fahrwerksteile etc., an der Unterseite von Schienenfahrzeugen.

Im allgemeinen sind bei Schienenfahrzeugen die an der Unterseite angeordneten Elemente, wie Werkzeugkästen, Druckrohrleitungen, Kabelführungen usw. frei zugänglich, d. h. sie sind nicht abgedeckt und daher gegen Schmutz, Steinschlag usw. schutzlos. Daß diese Bauelemente einer erhöhten Beschädigungs- und Korrosionsgefahr unterworfen sind, bedarf keiner weiteren Erläuterung. Andererseits aber ist schon versucht worden, durch tragende Kästen an der Wagenstruktur diese Elemente an der Wagenunterseite teilweise zu schützen. Es zeigte sich, daß in diesen Fällen, die Kästen entsprechend der Kontur des Lichtraumprofils gestaltet werden müssen und daher für größere Kraftübertragungen ungeeignet sind, weil die längskraftübertragenden Querschnitte außerhalb der Seitenwandebene liegen. Aufgrund des nicht unbeträchtlichen zusätzlichen Gewichts, sowie der zusätzlichen aerodynamischen Belastung bei hohen Geschwindigkeiten, werden solche Ausgestaltungen nur an relativ sehr wenigen Wagensonderausführungen vorgenommen. Hierbei spielt natürlich auch der erhöhte Energieverbrauch eine Rolle.

So ist man bei schnellfahrenden Schienenfahrzeugen dazu übergegangen, die Seitenflächen durch sogenannte Schürzen abzudecken und diese so auszugestalten, daß sie neben einem Seitenschutz für die Unterbodenanbauten auch gleichzeitig eine schalldämmende Wirkung aufweisen. Aber auch diese Ausführungsformen, wie sie beispielsweise in den DE-B-2 319 061 und DE-B-2 658 458 offenbart sind, vermitteln keinen optimalen Schutz bei gleichzeitiger Wärme-, Schall- und Feuchtigkeitsisolierung. Ist im einen Fall diese Isolierung gegeben, so ist hier der Gewichts- und Montageaufwand, sowie der erhöhte Energieverbrauch viel zu hoch und im anderen Fall entfällt zwar der Gewichtsaufwand, aber dafür ist die Isolierung gegen Schmutz, Steinschlag und Feuchtigkeit nicht gegeben.

Der vorliegenden Erfindung liegt die Aufgabe zugrunde, eine Abdeckhaube der eingangs genannten Art zu schaffen, die nicht nur die aufgeführten Nachteile beseitigt, sondern in optimaler Weise einen freizügigen Zugang zu den abgedeckten Bauelementen erlaubt, ohne daß ein zusätzlicher Ablageplatz für demontierte Bauteile, wie überhaupt aufwendige Demontagearbeiten erforderlich sind.

Diese Aufgabe wird durch die in den Ansprüchen niedergelegten Maßnahmen in einfacher aber wirkungsvoller Weise gelöst. In der Beschreibung sind Ausführungsbeispiele erläutert und in der Zeichnung grafisch dargestellt. Es zeigt

Fig. 1 eine Seitenansicht eines Schienenfahrzeugs mit eingezeichneten Bodenwannenfeldern,

Fig. 2 eine Ansicht eines Seitenwannenfeldes gemäß Fig. 1 in vergrößertem Maßstab,

Fig. 3 einen Schnitt entlang der Linie A-A gemäß Fig. 2, wobei nur eine Seite des symmetrischen Aufbaus gezeigt ist,

Fig. 4 einen Schnitt eines weiteren Ausführungsbeispiels einer Bodenwanne, wobei nur eine Seite des symmetrischen Aufbaus gezeichnet ist.

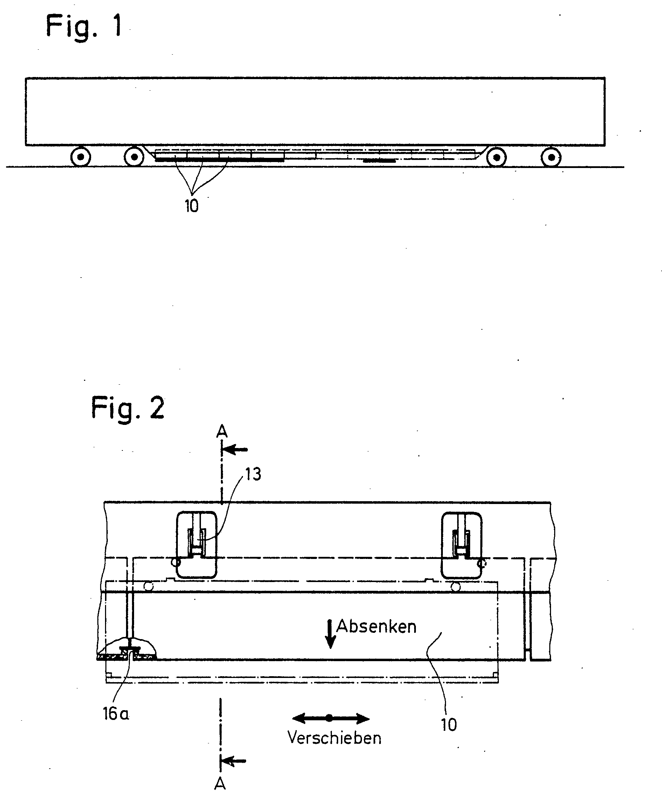

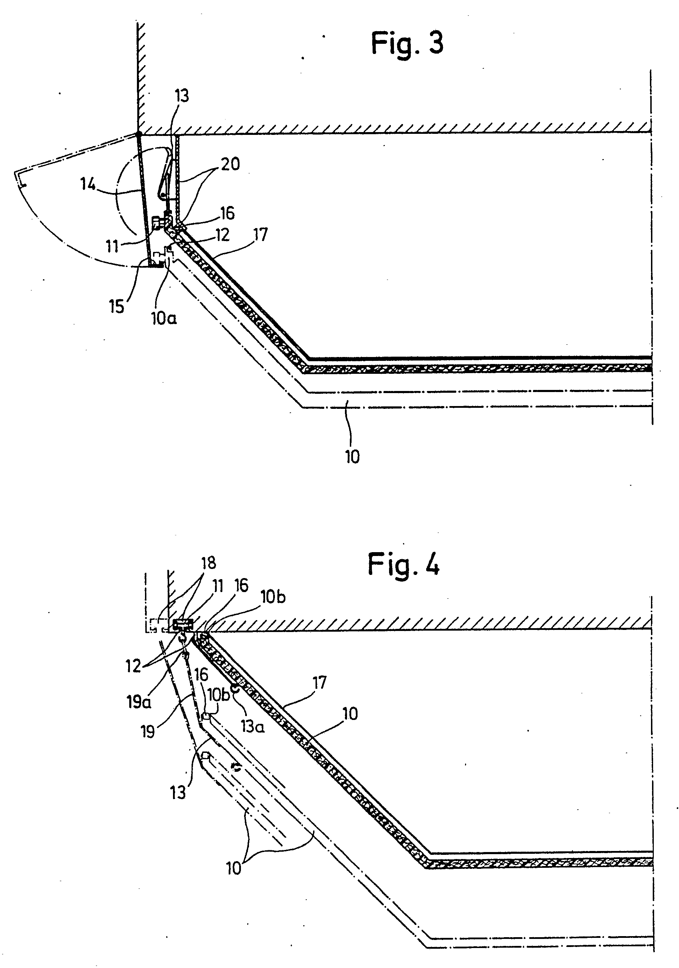

Die Fig. 1 zeigt in einer Gesamtansicht in schematischer Weise ein Schienenfahrzeug üblicher Bauart, das an seiner Unterseite mit den erfindungsgemäßen Bodenwannen abgedeckt ist. Innerhalb dieser Bodenwannen liegen nun die Wagenanbauten, wie beispielsweise Werkzeugkästen, Rohrleitungen für Druckluft, Warmwasser, Dampf etc., Bremsgestänge usw. geschützt. Diese Bodenwannen 10 sind nun als sogenannte »nichttragende Bodenabdeckung« ausgebildet, wobei diese eine Beibehaltung der bisherigen, zu überdeckenden Bauelemente in ihrer Ausgestaltung ermöglicht. Das heißt, diese Bodenwannen 10 erfordern keine Umgestaltung bzw. Änderung der bisherigen An- und Einbauten, wie oben angeführt. Diese Bodenwannen 10, insbesondere die erste und letzte Wanne, sind aerodynamisch anpassend geformt und weisen, wie die Fig. 2 und 3 zeigen, an den beiden Seitenkanten 10a Führungsrollen 11, eine Trageinrichtung 12 für die Verriegelungselemente 13 und Dichtelemente 16, die in Form von Dichtleisten ausgeführt sein können, auf. Die an den Wagenaußenwänden angeordneten Abdeckschürzen 14 sind an ihrer Unterseite mit einer Lauf- oder Gleitfläche 15 versehen, in der die Rollen 11 der Bodenwanne 10 laufen. Die als Schnellverschlüsse ausgebildeten Verriegelungselemente 13 spannen die Bodenwannen 10 mit ihren Dichtelementen 16 an die Wagenunterseite bzw. die dort angeordneten Anlageflächen 20. Die Wanneninnenflächen sind zusätzlich mit Dichtflächen 17 versehen, die aus einem gegen Schall und Kälte isolierendem Material sein können.

Um nun an die von der jeweiligen Wanne abgedeckten Wagenelemente zu kommen, werden die seitlich angeordneten Schnellverschlüsse 13 geöffnet. Damit senkt sich die Wanne ab und setzt mit ihren Rollen 11 an der Lauf- und Gleitfläche 15 auf. Nach dem Aushaken der Verriegelung 13 aus der Trageinrichtung 12, kann nun die Wanne in Wagenlängsrichtung verschoben werden und gibt somit den Montageraum frei.

Die Fig. 4 zeigt eine Variante in der Ausgestaltung der Bodenwanne 10. Hier ist an der Wagenunterfläche eine Schienenanordnung in Form eines Lauftunnels 18 angebracht, in dem Laufrollen 11 mit fest angeordneten Aufhängehaken 12 gleiten. In diese Laufrollen bzw. deren Haken 12 werden nun Ketten oder Seilstücke 19 mit Aufhängeösen 19a eingehängt und verspannt. Diese Verspannung geht so vor sich, daß das Seil über den Aufhängehaken 12 gezogen wird und in den Verriegelungshaken 13a eingespannt wird. Dadurch pressen sich die Dichtleisten 16 an den Wagenunterboden. Durch Aushängen der Öse aus dem Verriegelungshaken 13a und Einhängen in den Rollenhaken 11/12 wird die Bodenwanne 10 abgesenkt und kann in Wagenlängsrichtung verschoben werden.

Als vorteilhaft in bezug auf eine Gewichtsersparnis erweist es sich, wenn die Bodenwanne als integralversteiftes Bauteil aus Faserverbundwerkstoff — beispielsweise GFK — ausgebildet ist. Ferner gewährleisten die geteilten, klappbaren Schürzen 14 nach dem Absenken der Bodenwannen 10 den Ausbau in Fahrzeugquerrichtung. Um nun bei dem Ausführungsbeispiel gemäß Fig. 4 ebenfalls eine weitgehende Verschiebung der Bodenwanne 10 in Fahrzeuglängsrichtung zu gewährleisten, ist es zweckmäßig, jeweils zwei Lauftunnels 18 — wie in Fig. 4 gezeigt — anzuordnen, wobei jeweils von Wanne zu Wanne eine versetzte Aufhängung durchführbar ist. Die Gleit- und Laufkörper 11/12 werden durch Anheben und Drehen um 90° aus der Führungs- bzw. Gleitschiene des Lauftunnels 18 genommen.

## Patentansprüche

1. Hängende Abdeckhaube für Anbauten an Fahrzeugen, wie Werkzeugkästen, Rohrleitungen, Entlüftungsanlagen, Getriebe- und Fahrwerksteile etc. an der Unterseite von Schienenfahrzeugen, dadurch gekennzeichnet, daß mindestens eine selbsttragende, aerodynamisch günstig gestaltete Bodenwanne (10) an ihren beiden Seitenoberkanten (10a) mit Führungsrollen (11) und/oder Trageinrichtungen (12) sowie Verriegelungen (13) versehen ist, denen eine schwenkbar gelagerte Schürze (14) oder ein Lauftunnel (18) mit Lauf- oder Gleitschienen (15) zugeordnet ist.

2. Abdeckhaube nach Anspruch 1, dadurch gekennzeichnet, daß als Trageinrichtung (12) und Verriegelung (13) an sich bekannte Schnellverschlüsse, Seile oder Ketten mit entsprechenden Einhängeösen (19) versehen sind.

3. Abdeckhaube nach den Ansprüchen 1 und 2, dadurch gekennzeichnet, daß alle zur Anlage kommenden Flächen (10b) der Bodenwanne (10) mit einer Dichtleiste (16) versehen sind.

4. Abdeckhaube nach einem oder mehreren der Ansprüche 1—3, dadurch gekennzeichnet, daß die Trageinrichtung (12) und die Führungsrollen (11) ein einziges Bauelement bilden.

5. Abdeckhaube nach einem oder mehreren der Ansprüche 1—4, dadurch gekennzeichnet, daß die Innenwände der Bodenwanne (10) mit gegen Staub, Wasser, Schall und Kälte isolierendem Material (17) belegt sind.

6. Abdeckhaube nach einem oder mehreren der Ansprüche 1—5, dadurch gekennzeichnet, daß die Bodenwanne (10) als integralversteiftes Bauteil aus Faserverbundwerkstoff (Glas-Faser-Kunststoff etc.) ausgebildet ist.

## Claims

1. A suspended cover-hood for additions to vehicles, such as tool boxes, pipe lines, ventilating systems, gear and chassis parts etc., on the underside of rail vehicles, characterised in that at least one self-supporting aerodynamically favourably shaped base trough (10) is provided at the upper edges (10a) of its two sides with guide rollers (11) and/or supporting mechanisms (12) as well as locking mechanisms (13), with which a swingably- mounted apron (14) or a running tunnel (18) with running or sliding rails (15) is associated.

2. A cover-hood according to claim 1, characterised in that known »per se« snap closures, ropes or chains having appropriate suspension eyelets (19) are provided as the supporting mechanism (12) and locking mechanism (13).

3. A cover-hood according to claims 1 and 2, characterised in that all abutment surfaces (10b) of the floor trough (10) are provided with a sealing strip (16).

4. A cover-hood according to one or ore of claims 1 to 3, characterised in that the supporting mechanism (12) and the guide rollers (11) form a single structural element.

5. A cover-hood according to one or more of claims 1 to 4, characterised in that the inner walls of the base trough (10) are covered with material (17) which insulates against dust, water, sound and cold.

6. A cover-hood according to one or more of claims 1 to 5, characterised in that the base trough (10) is designed as an integrally-stiffened component made of fibre composite material (glass fibre plastics material etc).

## Revendications

1. Capot suspendu pour accessoires de véhicules, tels que caisses à outils, tuyauteries, installations de dégagement d'air, éléments de transmissions et de commandes mécaniques etc., sur la face inférieure de véhicules ferroviaires caractérisé par le fait qu'au moins un bac sous parquet (10) favorablement établi du point de vue aérodynamique et autoportant est muni, sur ses deux arêtes supérieures latérales, de galets de guidage (11) et/ou de dispositifs porteurs (12) ainsi que de verrouillages (13) avec lesquels coopère un tablier (14) pivotable ou un tunnel de roulement (18) comportant des rails de roulement ou de glissement(15).

2. Capot selon la revendication 1 caractérisé par le fait que, comme dispositif porteur (12) et verrouillage (13), des fermetures rapides, câbles ou chaînes connus en soi sont munis d'oeils de suspension (19) correspondants.

3. Capot selon les revendications 1 et 2, caractérisé par le fait que toutes les surfaces (10b) du bac sous parquet (10) qui viennent en appui sont munies d'une bordure d'étanchéité (16).

4. Capot selon une ou plusieurs des revendications 1 à 3, caractérisé par le fait que le dispositif porteur (12) et les galets de guidage (11) forment un seul élément de construction.

5. Capot selon une ou plusieurs des revendications 1 à 4, caractérisé par le fait que les parois intérieures du bac sous parquet (10) sont revêtues d'un matériau (17) isolant contre la poussière, l'eau, le bruit et le froid.

6. Capot selon une ou plusieurs des revendications 1 à 5, caractérisé par le fait que le bac sous parquet (10) est établi en élément de construction intégralement raidi en matériau composite fibreux (matière plastique renforcée de fibres de verre, etc).

# Fig. 1

10

# Fig. 2

A

13

Absenken

16a

10

Verschieben

A

# Fig. 3

# Fig. 4